# EUROPÄISCHE PATENTANMELDUNG

(11) **EP 3 798 155 A1**
(43) Veröffentlichungstag der Anmeldung: **31.03.2021**
(21) Anmeldenummer: 19199782.4
(22) Anmeldetag: 26.09.2019
(51) Int. Cl.: B65D 88/74, F25D 11/00, F25D 19/00, B65D 90/00, B65D 90/02

(54) **WECHSELAUFBAU MIT WENIGSTENS EINER ELEKTRISCH BETRIEBENEN AUSSTATTUNGSEINRICHTUNG**

(71) Anmelder: Schmitz Cargobull AG, 48341 Altenberge (DE)
(72) Erfinder: Flacke, Norbert, 45894 Gelsenkirchen (DE); Niewerth, Markus, 48683 Ahaus (DE); Dechering, Markus, 48691 Vreden (DE)
(74) Vertreter: Cohausz & Florack

(57) **Zusammenfassung**

Beschreiben und dargestellt ist ein Wechselaufbau (1) zur lösbaren Verbindung mit einem Nutzfahrzeug, insbesondere Nutzfahrzeugchassis, und/oder mit einem Schienenfahrzeug umfassend ein Dach (6), einen Ladeboden (8), zwei Stirnwände (4,5), zwei Seitenwände (2,3), wenigstens einen im Wechselaufbau (1) bereitgehaltenen Laderaum (7) und wenigstens eine elektrisch betriebene Ausstattungseinrichtung (9). Um das Verbinden von einer großen Anzahl von Wechselaufbauten in Nutzfahrzeugen oder Schienenfahrzeugen in kurzer Zeit zu vereinfachen, ist vorgesehen, dass den beiden Seitenwänden (2,3) und/oder den beiden Stirnwänden (4,5) zugeordnet und von außen zugänglich, vorzugsweise jeweils, ein Anschlussmittel (18) zum Anschließen einer Spannungsversorgung zum Betrieb der Ausstattungseinrichtung (9) und/oder, vorzugsweise jeweils, eine Bedieneinrichtung (19) zum Bedienen der Ausstattungseinrichtung (9) vorgesehen sind.

## Beschreibung

Die Erfindung betrifft einen Wechselaufbau zur lösbaren Verbindung mit einem Nutzfahrzeug, insbesondere Nutzfahrzeugchassis, und/oder mit einem Schienenfahrzeug umfassend ein Dach, einen Ladeboden, zwei Stirnwände, zwei Seitenwände, wenigstens einen im Wechselaufbau bereitgehaltenen Laderaum und wenigstens eine elektrisch betriebene Ausstattungseinrichtung.

Wechselaufbauten sind bereits seit geraumer Zeit und in unterschiedlichen Ausgestaltungen bekannt. Wechselaufbauten werden dabei je nach ihrer Ausgestaltung auch als Wechselbehälter, Wechselbrücke, Wechselpritsche, Wechselkoffer bezeichnet. Dabei zeichnen sich Wechselpritschen dadurch aus, dass wenigstens die Seitenwände und gegebenenfalls das Dach durch eine Plane verschlossen sind. Dagegen sind die Stirnwände, die Seitenwände und das Dach bei Wechselkoffern durch feste Wände gebildet. In diesem Zusammenhang wird vorliegend von zwei Stirnwänden gesprochen, weil sich insbesondere erst im mit einem Nutzfahrzeug oder Schienenfahrzeug verbundenen Zustand ergibt, welche Stirnseite die Vorderseite und welche Stirnseite die Rückseite bildet. Die Rückseite kann sich bedarfsweise dadurch auszeichnen, dass dort ein Rolltor oder wenigstens eine Tür vorgesehen ist, um den Laderaum zu beladen. Die Vorderseite kann dagegen dadurch gekennzeichnet sein, dass dort eine Transportkältemaschine zum Kühlen des Laderaums vorgesehen ist. Im Folgenden soll aber der Unterschied zwischen der Vorderseite und der Rückseite des Wechselaufbaus nur eine untergeordnete Bedeutung haben, weshalb nachfolgend vorwiegend von zwei Stirnseiten die Rede ist, von denen je nach der entsprechenden Definition der Ausrichtung eine die Vorderseite und die andere die Rückseite bildet.

Wechselaufbauten können nacheinander von unterschiedlichen Nutzfahrzeugen oder Schienenfahrzeugen transporteiert werden. Dazu werden die Wechselaufbauten ähnlich eines Containers lösbar mit den Nutzfahrzeugen oder Schienenfahrzeugen verbunden. Nutzfahrzeuge können die Wechselaufbauten zum Zwecke der Übernahme unterfahren, wozu die Wechselaufbauten Beine umfassen, mit denen die Wechselaufbauten auf dem Untergrund abgestellt werden können. Es ist auch möglich, die Wechselaufbauten auf einen Zug zu verladen und am Zielort des Zugs die Wechselaufbauten wieder von einem Nutzfahrzeug zu übernehmen. Die entsprechenden Nutzfahrzeuge sind dabei typischerweise Lastkraftwagen bzw. Motorwagen oder Anhänger, die von solchen Lastkraftwagen bzw. Motorwagen gezogen werden können. Bei den Anhängern kann es sich bedarfsweise auch um Sattelauflieger handeln. Die Wechselaufbauten werden meist mit dem Chassis eines Nutzfahrzeugs verbunden. Dabei kann das Chassis im Wesentlichen aus einer Leiterrahmenstruktur mit Längs- und Querträgern gebildet sein. An dem Chassis ist dann je nach dem Nutzfahrzeug typischerweise wenigstens ein Fahrwerk angebracht.

Die meisten Wechselaufbauten kommen ohne elektrisch betriebene Ausstattungseinrichtungen aus. Es kann aber beispielsweise auch eine Transportkältemaschine zum Kühlen des Laderaums oder eine andere Einrichtung vorgesehen sein. Diese Einrichtungen bedürfen in der Regel einer außen am Wechselaufbau angeordneten Bedieneinrichtung. Im Falle der Transportkältemaschine ist diese Bedieneinrichtung meist in die eigentliche Transportkältemaschine integriert. Um der Transportkältemaschine von außen, etwa vom Zug, vom Zugfahrzeug oder vom Motorwagen aus mit Strom zu versorgen, ist es bekannt, die Transportkältemaschine mit einem Anschlussmittel zum Anschließen einer Spannungsversorgung, etwa in Form eines Steckers oder einer Buchse, auszurüsten. Dann muss zur Spannungsversorgung der Transportkältemaschine nicht ein bedarfsweise in die Transportkältemaschine integrierter Verbrennungsmotor betrieben werden.

Beim Verbinden von Wechselaufbauten mit Nutzfahrzeugen oder Schienenfahrzeugen kommt es in vielen Fällen nicht darauf an, welche der beiden Stirnwände vorne und welche hinten ist. Wenn der Wechselaufbau im mit dem Nutzfahrzeug oder dem Schienenfahrzeug verbundenen Zustand nicht be- oder entlanden werden soll, kommt es auch nicht darauf an, ob die hierfür vorgesehenen Flügeltüren oder Rolltore vorne oder hinten angeordnet sind. Anders kann es sich jedoch verhalten, wenn die Wechselaufbauten elektrisch betriebene Ausstattungseinrichtungen aufweisen, die von außen mit Spannung versorgt und/oder von außen bedient werden sollen. Gerade wenn sehr viele Wechselaufbauten in kurzer Zeit mit Nutzfahrzeugen und/oder Schienenfahrzeugen verbunden werden sollen, kann es zu einem nicht unerheblichen Zeit- und Arbeitsaufwand führen, wenn penibel auf die Ausrichtung der Wechselaufbauten geachtet werden muss und eine nicht unerhebliche Anzahl von Wechselaufbauten vor dem Verbinden gedreht und damit richtig zum Nutzfahrzeug oder Schienenfahrzeug ausgerichtet werden müssen. Dies gilt umso mehr, wenn, insbesondere aus der Entfernung, nicht oder nur schwer erkannt werden kann, wo bei einem Wechselaufbau vorne bzw. hinten ist.

Der vorliegenden Erfindung liegt daher die Aufgabe zugrunde, das Verbinden von einer großen Anzahl von Wechselaufbauten in Nutzfahrzeugen oder Schienenfahrzeugen in kurzer Zeit zu vereinfachen.

Diese Aufgabe ist bei einem Wechselaufbau nach dem Oberbegriff von Anspruch 1 dadurch erreicht, dass den beiden Seitenwänden und/oder den beiden Stirnwänden zugeordnet und von außen zugänglich, vorzugsweise jeweils, ein Anschlussmittel zum Anschließen einer Spannungsversorgung zum Betrieb der Ausstattungseinrichtung und/oder, vorzugsweise jeweils, eine Bedieneinrichtung zum Bedienen der Ausstattungseinrichtung vorgesehen ist.

Durch die Anordnung des wenigstens einen Anschlussmittels und/oder der wenigstens einen Bedieneinrichtung am Wechselaufbau spielt es keine oder wenigstens keine große Rolle mehr, in welcher Ausrichtung der Wechselaufbau mit dem Nutzfahrzeug oder dem Schienenfahrzeug verbunden wird, und zwar auch bei solchen Wechselaufbauten, die eine elektrisch betriebene Ausstattungseinrichtung aufweisen. Dabei ist zudem zu beachten, dass die Wechselaufbauten typischerweise eine rechteckige Grundfläche aufweisen und im Bereich der Ecken der Grundfläche mit dem Nutzfahrzeug und/oder dem Schienenfahrzeug verbunden werden. Es gibt demnach also typischerweise nur zwei unterschiedliche Ausrichtungen, mit denen die Wechselaufbauten mit den Nutzfahrzeugen und/oder Schienenfahrzeugen verbunden werden können. Dabei ist entweder die eine Stirnwand des Wechselaufbaus vorne bezogen auf das Nutzfahrzeug bzw. das Schienenfahrzeug oder die andere Stirnseite.

Selbst wenn bei der Verbindung des Wechselaufbaus mit dem Nutzfahrzeug oder dem Schienenfahrzeug vorne und hinten vertauscht wird, kann der Wechselaufbau wenigstens im Wesentlichen trotzdem, insbesondere in gleicher Weise und bevorzugt auch im Wesentlichen an der gleichen Stelle, bedient und/oder mit Spannung versorgt werden. Da an beiden Seitenwänden und/oder an beiden Stirnwänden ein, insbesondere jeweils ein, Anschlussmittel und/oder eine, insbesondere jeweils eine, Bedieneinrichtung vorgesehen ist, ist sichergestellt, dass in den Bereichen, wo das Anschlussmittel und/oder die Bedieneinrichtungen bezogen auf das Nutzfahrzeug und/oder das Schienenfahrzeug zweckmäßig ist, insbesondere erwartet wird bzw. angeordnet sein soll, auch ein Anschlussmittel und/oder eine Bedieneinrichtung vorgesehen ist.

Im Ergebnis muss erfindungsgemäß kein Aufwand oder wenigstens kein hoher Aufwand betrieben werden, um die Wechselaufbauten mit den Nutzfahrzeugen und/oder Schienenfahrzeugen zu verbinden, ohne dass dies zu nennenswerten Nachteilen beim elektrischen Anschließen und/oder beim Bedienen des Wechselaufbaus führen würde. Andernfalls kann es zu einer erheblichen Zeitverzögerung und einem erheblichen Arbeitsaufwand führen, wenn beispielsweise nach dem Verbinden einer ganzen Reihe von Wechselaufbauten mit einem Schienenfahrzeug festgestellt wird, dass einzelne dieser Wechselaufbauten falsch herum verbunden worden sind. Dann kann keine elektrische Verbindung hergestellt werden oder es bedarf eines erheblichen zusätzlichen Aufwands, die entsprechenden Wechselaufbauten elektrisch anzuschließen oder zu bedienen. Bedarfsweise müssen die Wechselaufbauten noch einmal getrennt, umgedreht und erneut mit dem Nutzfahrzeug und/oder Schienenfahrzeug verbunden werden.

Bei einer ersten besonders bevorzugten Ausgestaltung des Wechselaufbaus ist wenigstens eine Anschlussmittel und/oder die wenigstens eine Bedieneinrichtung in wenigstens im Wesentlichen gleichen Bereichen der beiden Seitenwände und/oder der beiden Stirnwände vorgesehen. Wenn also an der rechten Seite des Wechselaufbaus eine Spannungsversorgung angeschlossen werden soll und/oder eine Bedienung erfolgen soll, kann dort ein Anschlussmittel und/oder eine Bedieneinrichtung vorgesehen sein, und zwar bedarfsweise egal, wie herum der Wechselaufbau gegenüber dem Nutzfahrzeug oder dem Schienenfahrzeug ausgerichtet ist. Wenn dagegen an der vorderen Seite des Wechselaufbaus eine Spannungsversorgung angeschlossen werden soll und/oder eine Bedienung erfolgen soll, kann auch dort im entsprechenden, vorgegebenen Bereich ein Anschlussmittel und/oder eine Bedieneinrichtung vorgesehen sein, bedarfsweise egal wie herum der Wechselaufbau gegenüber dem Nutzfahrzeug oder dem Schienenfahrzeug ausgerichtet ist.

Die sich daraus ergebenden Vorteile kommen dabei insbesondere zum Tragen, wenn zwei jeweils gegenüberliegenden Seitenwänden und/oder Stirnwänden zugeordnete Anschlussmittel wenigstens im Wesentlichen an gleichen Bereichen der beiden Seitenwände und/oder der beiden Stirnwände vorgesehen ist. Alternativ oder zusätzlich können auch zwei jeweils gegenüberliegenden Seitenwänden und/oder Stirnwänden zugeordnete Bedieneinrichtungen wenigstens im Wesentlichen an gleichen Bereichen der beiden Seitenwände und/oder der beiden Stirnwände vorgesehen sein. Dann ist in den entsprechenden Bereichen eines bestimmten Stirnwand und/oder Seitenwand bezogen auf das Nutzfahrzeug und/oder das Schienenfahrzeug eines der beiden Anschlussmittel und/oder eine der beiden Bedieneinrichtungen zu finden, und zwar egal in welcher Ausrichtung der Wechselaufbau mit dem Nutzfahrzeug und/oder dem Schienenfahrzeug verbunden worden ist.

Alternativ oder zusätzlich sind das wenigstens eine Anschlussmittel und/oder die wenigstens eine Bedieneinrichtung der beiden Seitenwände und/oder der beiden Stirnwände wenigstens im Wesentlichen auf einer gemeinsamen Ebene parallel zum Ladeboden und/oder zum Dach angeordnet. Auf diese Weise wird sichergestellt, dass das wenigstens eine Anschlussmittel und/oder die wenigstens eine Bedieneinrichtung unabhängig von der jeweiligen Ausrichtung des Wechselaufbaus etwa auf der gleichen Höhe angeordnet sind und dort auch problemlos aufgefunden werden können.

Wenn das wenigstens eine Anschlussmittel und/oder die wenigstens eine Bedieneinrichtung der beiden Seitenwände und/oder der beiden Stirnwände auf der gemeinsamen Ebene wenigstens im Wesentlichen diametral gegenüber angeordnet sind, kann das wenigstens eine Anschlussmittel und/oder die wenigstens eine Bedieneinrichtungen insbesondere beispielsweise auch in den Ecken der Stirnwände und/oder Seitenwände vorgesehen werden. Auch wenn dann beim Wechselaufbau Vorne und Hinten vertauscht wird, kann der Anschluss oder die Bedienung wie gewünscht erfolgen.

Dabei bietet es sich grundsätzlich an, wenn der Wechselaufbau ein Wechselkoffer mit einem festen Dach, festen Stirnwänden und festen Seitenwänden ist. Dann kann das wenigstens eine Anschlussmittel und/oder die wenigstens eine Bedieneinrichtung in besonders einfacher Weise vorgesehen werden. Beispielsweise kann das wenigstens eine Anschlussmittel und/oder die wenigstens eine Bedieneinrichtung dann problemlos in die festen Wände oder das Dach integriert werden. Es bleibt aber auch dann möglich, dass das wenigstens eine Anschlussmittel und/oder die wenigstens eine Bedieneinrichtung an einem Rahmen der Stirnwände und/oder Seitenwände oder darunter vorgesehen werden. Insbesondere kann das wenigstens eine Anschlussmittel auch unter dem Ladeboden vorgesehen sein.

Darüber hinaus kann es sich anbieten, wenn wenigstens das Dach und die Seitenwände aus Paneelen umfassend zwei äußere Decklagen und eine dazwischen angeordnete Kernlage aus einem geschäumten Kunststoff gebildet sind. Dann kann das wenigstens eine Anschlussmittel und/oder die wenigstens eine Bedieneinrichtung in besonders einfacher Weise in die festen Wände und/oder das Dach integriert werden. Des Weiteren kann so, insbesondere durch den geschäumten Kunststoff der Kernlage, die thermische Isolierung des Wechselaufbaus verbessert werden. Dies ist insbesondere für den Transport von temperaturempfindlichen Gütern von Vorteil.

Dann ist es weiter bevorzugt, wenn die Ausstattungseinrichtung wenigstens eine Transportkältemaschine zum Temperieren des wenigstens einen Laderaums umfasst. So kann die Temperatur des Laderaums wenigstens in etwa vorgegeben werden. Hierbei ist nicht nur ein Kühlen des Laderaums, sondern auch ein Aufwärmen des Laderaums denkbar. Meist kommt aber ein Abkühlen in Frage, weshalb hier auch der Begriff der Transportkältemaschine benutzt wird.

Im Falle wenigstens einer Transportkältemaschine kann ein Verdampfer, eine Drossel, ein Verdichter und/oder ein Kondensator der wenigstens einen Transportkältemaschine am und/oder im Dach des Wechselaufbaus angeordnet sein. Die Transportkältemaschine wird dann nämlich nicht mehr benötigt, um erkennbar zu machen, wo bei dem Wechselaufbau vorne ist bzw. an welcher Stirnseite die Transportkältemaschine angebracht ist. Ein Verwechseln der beiden Stirnseiten führt nämlich zu keinerlei oder wenigstens nur zu unerheblichen Nachteilen. Alternativ oder zusätzlich kann die Transportkältemaschine so platzsparender angeordnet werden.

Wenn ein Verdampfer, eine Drossel, ein Verdichter und/oder ein Kondensator der wenigstens einen Transportkältemaschine wenigstens im Wesentlichen im Paneel des Dachs angeordnet ist, ist dies bedarfsweise besonders platzsparend. Alternativ oder zusätzlich wird der Verdampfer, die Drossel, der Verdichter und/oder der Kondensator der wenigstens einen Transportkältemaschine auf diese Weise gut gegenüber einer mechanischen Beschädigung geschützt. Zu einer mechanischen Beschädigung kann es ansonsten beispielsweise dadurch kommen, dass die Ladung beim Be- und/oder Entladen gegen den Verdampfer, die Drossel, den Verdichter und/oder den Kondensator stößt.

Die Verbindung des Wechselaufbaus kann vereinfacht und zuverlässiger gestaltet werden, wenn den vier Ecken des Ladebodens zugeordnet Verbindungsaufnahmen zum Aufnehmen und Verbinden von Montagezapfen, insbesondere von sogenannten Twistlocks, des Nutzfahrzeugs und/oder Schienenfahrzeugs vorgesehen sind. Dies sind standardisierte Anschlüsse, die zudem für eine höhere Flexibilität hinsichtlich der Verwendung der Wechselaufbauten dienen.

Nachfolgend wird die Erfindung in einer lediglich Ausführungsbeispiele darstellenden Zeichnung näher erläutert. In der Zeichnung zeigt
- Fig. 1: einen ersten erfindungsgemäßen Wechselaufbau in einer schematischen, perspektivischen Seitenansicht und
- Fig. 2: einen zweiten erfindungsgemäßen Wechselaufbau in einer schematischen, perspektivischen Draufsicht.

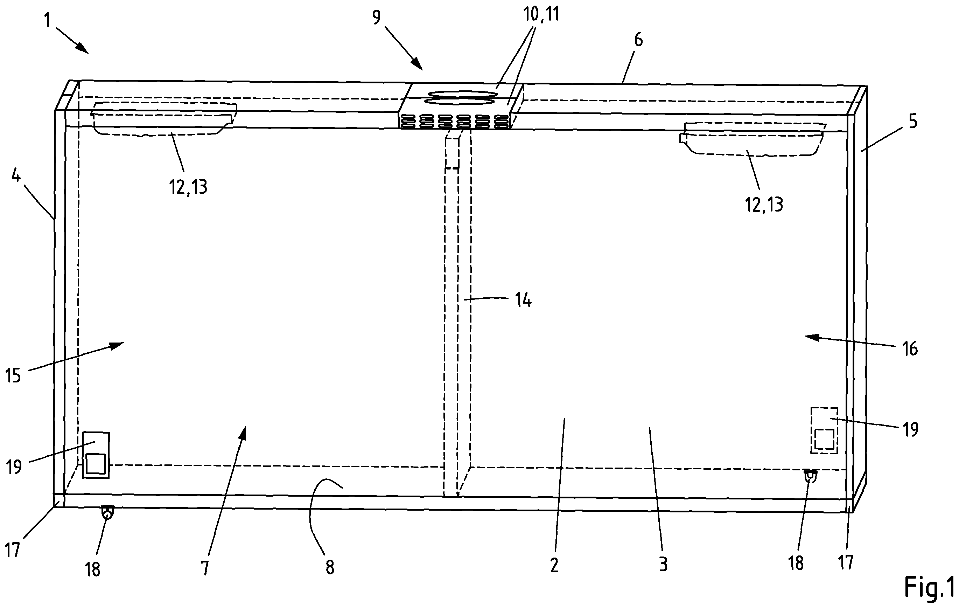

In der Fig. 1 ist ein lösbar mit einem nicht dargestellten Chassis eines Nutzfahrzeugs verbindbarer Wechselaufbau 1 dargestellt. Der Wechselaufbau 1 ist dabei als Wechselkoffer mit festen Seitenwänden 2,3, festen Stirnwänden 4,5 und einem festen 6 Dach ausgebildet, die einen Laderaum 7 umfassen. Nach unten wird der Laderaum 7 durch einen Ladeboden 8 begrenzt. Die Stirnwände 4,5, die Seitenwände 2,3 und das Dach 6 sind dabei durch feste Paneele gebildet, die jeweils zwei strukturgebende äußere Decklagen und dazwischen eine Kernlage aus geschäumtem Kunststoff aufweisen können. Die Decklagen können ein oder mehrlagig ausgebildet sein und insbesondere wenigstens eine metallene Lage, wenigstens eine Lage aus Kunststoff und/oder wenigstens eine Lage aus einem faserverstärkten Kunststoff aufweisen.

Im Bereich des Dachs 6 und teilweise in das Dach 6 integriert sind zwei Ausstattungseinrichtungen 9 in Form von Transportkältemaschinen vorgesehen. Diese weisen jeweils einen nicht im Einzelnen dargestellten Kühlkreis für ein Wärmeträgerfluid auf, in dem nacheinander ein Verdichter 10, zum Kondensieren des Wärmeträgerfluids in einem dem Verdichter 10 nachgeschalteten Kondensator 11 und eine Drossel 12 zum Verdampfen des Wärmeträgerfluids in einem der Drossel 12 nachgeschalteten Verdampfer 13 anordnet sind. Über Wärmetauscherflächen des Verdampfers 13 wird dem Laderaum 7 Wärme entzogen, die über Wärmetauscherflächen des Kondensators 11 an die Umgebung abgegeben wird. Entsprechende Kühlkreisläufe, die nach dem Prinzip eines Kühlschranks funktionieren, sind seit vielen Jahren bekannt und zur Kühlung von Laderäumen von Nutzfahrzeugen und Schienenfahrzeugen weit verbreitet. Um den Laderaum 7 zu kühlen, ragt der Verdampfer 13 wenigstens teilweise in den Laderaum 7 hinein oder ist wenigstens der Verdampfer 13 in fluider Verbindung mit der zu kühlenden Luft des Laderaums 7. Um die Wärme aus dem Laderaum 7 an die Umgebung abgeben zu können, ist der Kondensator 11 in fluider Verbindung mit der Umgebungsluft und kann zudem bedarfsweise wenigstens teilweise aus dem Dach 6 herausragen.

Bei dem dargestellten und insoweit bevorzugten Wechselaufbau 1 ist der Laderaum 7 durch eine Trennwand 14 in zwei Abschnitte 15,16 unterteilbar, die über die beiden Ausstattungseinrichtungen 9 auf unterschiedlichen Temperaturniveaus temperiert werden können. Es ist jedoch weder eine solche Trennwand 14 noch eine zweite Ausstattungseinrichtung 9 erforderlich. Nicht dargestellt sind übrigens die schwenkbar am Wechselaufbau 1 vorgesehenen Beine, auf denen der Wechselaufbau 1 abgestellt werden kann, wenn der Wechselaufbau 1 nicht mit einem Nutzfahrzeug verbunden ist. Die Beine sind dabei im ausgeschwenkten Zustand so lang, dass das Nutzfahrzeug unter dem abgestellten Wechselaufbau 1 herausgefahren und später von einem anderen Nutzfahrzeug unterfahren werden kann, um den Wechselaufbau 1 zwischen unterschiedlichen Nutzfahrzeugen zu tauschen. Zum Verbinden des Wechselaufbaus 1 mit den unterschiedlichen Nutzfahrzeugen sind an den vier Ecken um den Ladeboden des Wechselaufbaus herum vier Verbindungsaufnahmen 17 zum Aufnehmen und Verbinden von Montagezapfen, insbesondere von sogenannten Twistlocks, vorgesehen, die an sich bekannt und vorliegend nicht im Einzelnen dargestellt sind.

Die Ausstattungseinrichtungen 9, insbesondere die Verdichter 10, werden elektrisch betrieben. Die Spannungsversorgung erfolgt bedarfsweise über eines von zwei Anschlussmitteln 18, etwa in Form eines Steckers oder einer Buchse, an denen eine Spannungsversorgung angeschlossen werden kann. Des Weiteren sind noch zwei Bedieneinrichtungen 19 zum Bedienen der Ausstattungseinrichtungen 9 vorgesehen. Die Anschlussmittel 18 und die Bedieneinrichtungen 19 sind über entsprechende aber nicht dargestellte Stromleitungen bzw. Signalleitungen mit den Einrichtungen der Ausstattungseinrichtungen 9 im Dach 6 verbunden. Während die Bedieneinrichtung 19 in die Seitenwände 2,3 des Wechselaufbaus 1 integriert sind, befinden sich die Anschlussmittel 18 bei dem dargestellten und insoweit bevorzugten Wechselaufbau 1 den Seitenwänden 2,3 zugeordnet aber unterhalb des Ladebodens 8.

Dennoch sind die Anschlussmittel 18 und die Bedieneinrichtungen 19 jeweils an gleichen Bereichen des Wechselaufbaus 1 vorgesehen, nämlich an einem linken unteren Eckbereich der jeweiligen Seitenwand 2,3 zugeordnet. Demnach ist es unerheblich, in welcher Ausrichtung der Wechselaufbau 1 mit einem Nutzfahrzeug oder einem Schienenfahrzeug verbunden wird. Es befinden sich stets an einer vorbestimmten Seitenwand 2,3 ein Anschlussmittel 18 und eine Bedieneinrichtung 19 in dem entsprechenden Bereich der Seitenwand 2,3, also vorliegend in einem linken unteren Eckbereich. Die Anschlussmittel 18 und die Bedieneinrichtungen 19 sind zudem der leichteren Handhabung wegen jeweils den Außenseiten der Seitenwände 2,3 zugeordnet bzw. von außen zugänglich.

Beim dargestellten und insoweit bevorzugten Wechselaufbau 1 sind die Anschlussmittel 18 und/oder die Bedieneinrichtungen 19 zudem wenigstens in etwa auf einer gemeinsamen Ebene parallel zum Ladeboden 8 und/oder zum Dach 6 angeordnet. Deshalb sind die Anschlussmittel 18 und die Bedieneinrichtungen 19 auch unabhängig von der Ausrichtung des Wechselaufbaus 1 stets etwa auf derselben Höhe angeordnet. Ferner sind die Anschlussmittel 18 und die Bedieneinrichtungen 19 diametral gegenüber im Bereich entsprechender Ecken der Seitenwände 2,3 angeordnet, so dass es hinsichtlich des Anschließens des Wechselaufbaus 1 und der Bedienung der Ausstattungseinrichtung 9 nicht darauf ankommt, welche der beiden Stirnseiten 4,5 des Wechselaufbaus 1 der Vorderseite des Nutzfahrzeugs oder des Schienenfahrzeugs zugeordnet wird.

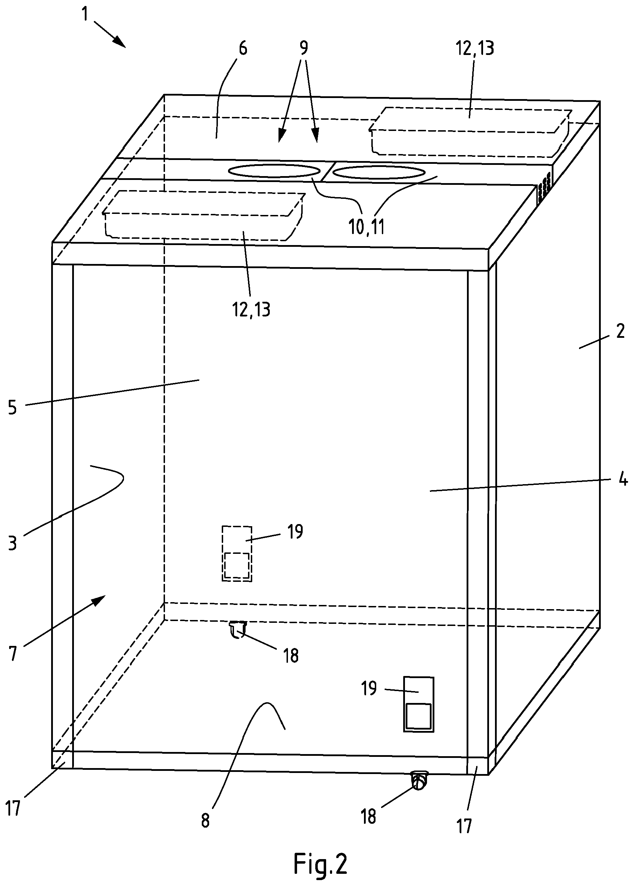

In der Fig. 2 ist ein alternativer Wechselaufbau 1 dargestellt, der sich im Wesentlichen dadurch von dem Wechselaufbau 1 der Fig. 1 unterscheidet, dass die Anschlussmittel 18 und Bedieneinrichtungen 19 den Stirnwänden 4,5 und nicht den Seitenwänden 2,3 zugeordnet sind. Auch bei dem Wechselaufbau 1 der Fig. 2 sind die Anschlussmittel 18 und Bedieneinrichtungen 19 in denselben Bereichen bezogen auf die jeweilige Stirnwand 4,5 angeordnet, nämlich in einem rechten unteren Eckbereich. Dabei sind die Anschlussmittel 18 und Bedieneinrichtungen 19 von außen zugänglich. Ferner sind die Anschlussmittel 18 und Bedieneinrichtungen 19 wenigstens im Wesentlichen auf einer gemeinsamen Ebene parallel zum Ladeboden 8 und/oder dem Dach 6 angeordnet sowie wenigstens im Wesentlichen in dieser Ebene diametral einander gegenüber angeordnet. Bei dem Wechselaufbau 1 der Fig. 2 ist ebenso die Ausstattungseinrichtung 9 in Form einer Transportkältemaschine wenigstens teilweise in das Dach 6 integriert. Aber auch hier wäre es grundsätzlich ausreichend, wenn nur eine Ausstattungseinrichtung 9 in Form einer Transportkältemaschine vorgesehen wäre.

## Patentansprüche

1. Wechselaufbau (1) zur lösbaren Verbindung mit einem Nutzfahrzeug, insbesondere Nutzfahrzeugchassis, und/oder mit einem Schienenfahrzeug umfassend ein Dach (6), einen Ladeboden (8), zwei Stirnwände (4,5), zwei Seitenwände (2,3), wenigstens einen im Wechselaufbau (1) bereitgehaltenen Laderaum (7) und wenigstens eine elektrisch betriebene Ausstattungseinrichtung (9),
**dadurch gekennzeichnet, dass**
den beiden Seitenwänden (2,3) und/oder den beiden Stirnwänden (4,5) zugeordnet und von außen zugänglich, vorzugsweise jeweils, ein Anschlussmittel (18) zum Anschließen einer Spannungsversorgung zum Betrieb der Ausstattungseinrichtung (9) und/oder, vorzugsweise jeweils, eine Bedieneinrichtung (19) zum Bedienen der Ausstattungseinrichtung (9) vorgesehen ist.

2. Wechselaufbau nach Anspruch 1,
**dadurch gekennzeichnet, dass**
das wenigstens eine Anschlussmittel (18) und/oder die wenigstens eine Bedieneinrichtung (19) in wenigstens im Wesentlichen gleichen Bereichen der beiden Seitenwände (2,3) und/oder der beiden Stirnwände (4,5) vorgesehen sind.

3. Wechselaufbau nach Anspruch 1,
**dadurch gekennzeichnet, dass**
das wenigstens eine Anschlussmittel (18) und/oder die wenigstens eine Bedieneinrichtung (19) der beiden Seitenwände (2,3) und/oder der beiden Stirnwände (4,5) wenigstens im Wesentlichen auf einer gemeinsamen Ebene parallel zum Ladeboden (8) und/oder zum Dach (6) angeordnet sind.

4. Wechselaufbau nach Anspruch 2,
**dadurch gekennzeichnet, dass**
das wenigstens eine Anschlussmittel (18) und/oder die wenigstens eine Bedieneinrichtung (19) der beiden Seitenwände (2,3) und/oder der beiden Stirnwände (4,5) auf der gemeinsamen Ebene wenigstens im Wesentlichen diametral gegenüber angeordnet sind.

5. Wechselaufbau nach einem der Ansprüche 1 bis 3,
**dadurch gekennzeichnet, dass**
der Wechselaufbau (1) ein Wechselkoffer mit einem festen Dach (6), festen Stirnwänden (4,5) und festen Seitenwänden (2,3) ist.

6. Wechselaufbau nach Anspruch 4,
**dadurch gekennzeichnet, dass** wenigstens das Dach (6) und die Seitenwände (2,3) aus Paneelen umfassend zwei äußere Decklagen und einer dazwischen angeordneten Kernlage aus einem geschäumten Kunststoff gebildet sind.

7. Wechselaufbau nach Anspruch 4 oder 5,
**dadurch gekennzeichnet, dass**
die Ausstattungseinrichtung (9) wenigstens eine Transportkältemaschine zum Temperieren des wenigstens einen Laderaums (7) umfasst.

8. Wechselaufbau nach Anspruch 6,
**dadurch gekennzeichnet, dass**
ein Verdampfer (13), eine Drossel (12), ein Verdichter (10) und/oder ein Kondensator (11) der wenigstens einen Transportkältemaschine am und/oder im Dach (6) des Wechselaufbaus (1) angeordnet ist.

9. Wechselaufbau nach Anspruch 7,
**dadurch gekennzeichnet, dass**
ein Verdampfer (13), eine Drossel (12), ein Verdichter (10) und/oder ein Kondensator (11) der wenigstens einen Transportkältemaschine wenigstens im Wesentlichen im Paneel des Dachs (6) angeordnet ist.

10. Wechselaufbau nach einem der Ansprüche 1 bis 8,
**dadurch gekennzeichnet, dass**
den vier Ecken des Ladebodens zugeordnet Verbindungsaufnahmen (17) zum Aufnehmen und Verbinden von Montagezapfen, insbesondere von sogenannten Twistlocks, des Nutzfahrzeugs und/oder Schienenfahrzeugs angebracht sind vorgesehen sind.
